# EUROPÄISCHE PATENTSCHRIFT

(11) **EP 4 408 566 B1**
(45) Veröffentlichungstag und Bekanntmachung des Hinweises auf die Patenterteilung: **11.06.2025**
(21) Anmeldenummer: 22798256.8
(22) Anmeldetag: 28.09.2022
(51) Int. Cl.: B01D 46/00, B01D 46/24, B01D 46/44, B01D 46/64, B01D 46/84

(54) **LUFTREINIGUNGSEINRICHTUNG ZUR REINIGUNG VON LUFT SOWIE VERFAHREN ZUM BETREIBEN EINER LUFTREINIGUNGSEINRICHTUNG**
AIR PURIFYING DEVICE FOR PURIFYING AIR AND METHOD FOR OPERATING AN AIR PURIFYING DEVICE
DISPOSITIF DE PURIFICATION D'AIR POUR PURIFIER DE L'AIR ET PROCÉDÉ POUR FAIRE FONCTIONNER UN DISPOSITIF DE PURIFICATION D'AIR

(30) Priorität: 28.09.2021 DE 102021125027
(43) Veröffentlichungstag der Anmeldung: 07.08.2024
(73) Patentinhaber: AUDI AG, 85057 Ingolstadt (DE)
(72) Erfinder: HALL, Matthew David, 71672 Marbach am Neckar (DE); SCHIEDT, Guido, 71397 Leutenbach (DE); ZELLNER, Alexander, 76137 Karlsruhe (DE)
(74) Vertreter: Dietz, Christopher Friedrich
(86) Internationale Anmeldenummer: PCT/EP2022/077022
(87) Internationale Veröffentlichungsnummer: WO 2023/052451

(56) Entgegenhaltungen:
- WO-A1-2021/009085
- CN-B- 105 561 685
- DE-A1- 102018 008 259

## Beschreibung

Die Erfindung betrifft eine Luftreinigungseinrichtung zur Reinigung von Luft, mit einem Gehäuse, an dem ein Lufteinlass und ein Luftauslass ausgebildet sind, die über einen in dem Gehäuse verlaufenden Strömungsweg strömungstechnisch aneinander angebunden sind, wobei in dem Strömungsweg eine Luftfördereinrichtung zur Förderung der Luft entlang des Strömungswegs sowie ein Luftfilter zur Ausfilterung von Fremdpartikeln aus der Luft angeordnet sind, wobei der Luftfilter wenigstens einen Filterkörper eines Kraftfahrzeugpartikelfilters aus einem Keramikmaterial mit einer lipophilen Oberfläche aufweist. Die Erfindung betrifft weiterhin ein Verfahren zum Betreiben einer Luftreinigungseinrichtung.

Aus dem Stand der Technik ist beispielsweise die Druckschrift DE 10 2018 008 259 A1 bekannt. Diese beschreibt Filteranlagen für Schwebstoffe mit Teilchengrößen von 400 pm bis kleiner oder gleich 500 µm und ihre Verwendung. Weiterhin offenbart die Druckschrift WO 2021/009085 A1 einen Luftfilter mit einer Membranschicht aus Siliziumkarbid. Die Druckschrift CN 105 561 685 B beschreibt die Verwendung eines Wabenkörpers als Luftfilter in einer Innenraum luftfiltervorrichtung.

Es ist Aufgabe der Erfindung, eine Luftreinigungseinrichtung zur Reinigung von Luft vorzuschlagen, welche gegenüber bekannten Luftreinigungseinrichtungen Vorteile aufweist, insbesondere eine besonders hohe Filterleistung bei geringem Druckverlust aufweist.

Dies wird erfindungsgemäß mit einer Luftreinigungseinrichtung zur Reinigung von Luft mit den Merkmalen des Anspruchs 1 erreicht. Dabei ist vorgesehen, dass strömungstechnisch zwischen dem Lufteinlass und dem Luftfilter eine Heizvorrichtung vorliegt.

Vorteilhafte Ausgestaltungen mit zweckmäßigen Weiterbildungen der Erfindung sind in den abhängigen Ansprüchen angegeben.

Die Luftreinigungseinrichtung dient der Reinigung von Luft, also dem zumindest teilweisen beseitigen von in der Luft enthaltenen Fremdpartikeln. Die zu reinigende Luft wird von der Luftreinigungseinrichtung als Rohluft aus einer Außenumgebung der Luftreinigungseinrichtung angesaugt, gereinigt beziehungsweise gefiltert und anschließend als Reinluft wieder in die Außenumgebung ausgestoßen. Es versteht sich hierbei von selbst, dass die Außenumgebung der Luftreinigungseinrichtung ein beliebiges Luftvolumen sein kann. Unter der Außenumgebung kann insoweit zum Beispiel ein Innenraum eines Gebäudes, insbesondere Wohngebäudes, oder dergleichen zu verstehen sein. Die Fremdpartikel, welche mithilfe der Luftreinigungseinrichtung aus der Luft ausgefiltert werden sollen, sind insbesondere Mikroorganismen. Unter Mikroorganismen sind im Rahmen dieser Beschreibung insbesondere Bakterien, Viren und/oder Pilze zu verstehen.

Die Luftreinigungseinrichtung verfügt über das Gehäuse, an welchem der Lufteinlass und der Luftauslass ausgebildet sind. Der Lufteinlass liegt beispielsweise als Lufteinlassöffnung vor oder weist eine solche zumindest auf. Die Lufteinlassöffnung ist in einer Wand des Gehäuses, insbesondere an einer Außenwand des Gehäuses, ausgestaltet. Analog hierzu liegt der Luftauslass als Luftauslassöffnung vor beziehungsweise weist eine solche zumindest auf. Auch die Luftauslassöffnung ist insbesondere in der Wand beziehungsweise Außenwand des Gehäuses hergestellt. Die Luft wird durch den Lufteinlass als Rohluft angesaugt und durch den Luftauslass als Reinluft ausgebracht. Der Lufteinlass und der Luftauslass sind über den Strömungsweg strömungstechnisch aneinander angeschlossen, wobei der Strömungsweg zumindest teilweise, bevorzugt vollständig, in dem Gehäuse verläuft. Insbesondere strömt also die Luft ausgehend von den Lufteinlass bis hin zu dem Luftauslass durchgehend in dem Gehäuse.

In dem Strömungsweg beziehungsweise entlang des Strömungswegs liegen die Luftfördereinrichtung sowie der Luftfilter vor. Die Fluidfördereinrichtung dient der Förderung von Luft von dem Lufteinlass hin zu dem Luftauslass und entsprechend entlang des Strömungswegs. Die Luftfördereinrichtung liegt beispielsweise als Ventilator, Gebläse oder dergleichen vor. Die Fluidfördereinrichtung kann auch einen Ionenwindgenerator aufweisen. Dieser dient dem Fördern der Luft entlang des Strömungswegs und/oder dem (zusätzlichen) Reinigen der Luft.

Unter dem Ionenwindgenerator ist eine Luftfördereinrichtung zu verstehen, mittels welcher der Luftstrom entlang des Strömungswegs erzeugbar ist beziehungsweise zumindest zeitweise erzeugt wird. Der lonenwindgenerator weist grundsätzlich zwei Elektroden auf, welche beabstandet zueinander angeordnet sind und mittels welchen ein elektrisches Feld erzeugt wird. Hierzu wird an einer ersten der Elektroden ein erstes elektrisches Potenzial und an einer zweiten Elektroden ein von dem ersten elektrischen Potenzial verschiedenes zweites elektrisches Potenzial angelegt.

Zusätzlich zu dem Fördern der Luft nimmt der Ionenwindgenerator eine Reinigung der Luft vor, da die von ihm erzeugten Ionen effektiv Fremdpartikel binden. Insbesondere sorgen die Ionen für eine Clusterbildung der Fremdpartikel, also einer Aggregation der Fremdpartikel, woraufhin die aggregierten Fremdpartikel aufgrund ihres höheren Gewichts besonders effektiv aus der Luft abgeschieden werden können. Zusätzlich oder alternativ erzeugt der lonenwindgenerator während seines Betriebs Ozon. Dieses reinigt und/oder desinfiziert die Luft, wobei Bakterien und/oder Viren abgetötet oder zumindest inaktiviert werden.

Weiterhin ist der Luftfilter in dem Strömungsweg angeordnet. Dieser dient der Ausfilterung der Fremdpartikel aus der Luft. Der Luftfilter könnte als Schwebstofffilter ausgestaltet sein und entsprechend ein Filterelement aufweisen, welches in in dem Strömungsweg angeordnet ist und von der Luft zumindest zeitweise durchströmt wird. Das Filterelement besteht beispielsweise zumindest aus Fasern, insbesondere Glasfasern, die die Fremdpartikel aus der Luft durch Tiefenfiltration ausfiltern und einlagern. Der Luftfilter kann bei einer solchen Ausgestaltung auch als HEPA-Filter bezeichnet werden.

Ein derartiges Filterelement setzt sich jedoch mit der Zeit aufgrund der der sich in ihm aggregierenden Fremdpartikel zu, sodass es von Zeit zu Zeit ausgetauscht werden muss. Dies ist zum einen kostenintensiv und zum anderen können sich, falls Mikroorganismen als Fremdpartikel in dem Filterelement vorliegen, diese während des Wechselns des Filterelements aus diesem herausgelangen, sodass eine Ausbreitung der Mikroorganismen erfolgt. Zudem ist ein solches Filterelement üblicherweise nicht wiederverwendbar, sodass ein hoher Ressourceneinsatz vorliegt und eine große Menge an aufgrund der Beladung mit Mikroorganismen gegebenenfalls sogar separat zu entsorgendem Müll anfällt.

Aus diesem Grund ist es stattdessen vorgesehen, dass der Luftfilter den Filterkörper des Kraftfahrzeugpartikelfilters aufweist. Hierunter ist zu verstehen, dass der Filterkörper des Luftfilters identisch mit dem Filterkörper eines Kraftfahrzeugpartikelfilters ausgestaltet ist beziehungsweise dass der Filterkörper wahlweise in dem Kraftfahrzeugpartikelfilter oder in der Luftreinigungseinrichtung Verwendung findet. In anderen Worten ist der Filterkörper baugleich mit dem Filterkörper des Kraftfahrzeugpartikelfilters. Der Filterkörper besteht aus dem Keramikmaterial, beispielsweise zumindest teilweise oder vollständig aus einem der folgenden Materialien: Siliziumkarbid, Cordierit und Aluminiumtitanat.

Der Filterkörper beziehungsweise das Keramikmaterial weist eine Oberfläche auf, welche zumindest zeitweise von der entlang des Strömungswegs strömenden Luft angeströmt, überströmt und/oder durchströmt wird. Diese Oberfläche wird insoweit auch als luftführende Oberfläche bezeichnet. Der Filterkörper ist derart ausgestaltet, dass seine Oberfläche, insbesondere die luftführende Oberfläche, lipophil ist. Dies hat den Vorteil, dass den Fremdpartikeln bei einem Kontakt mit dem Filterkörper Feuchtigkeit entzogen wird. Dies führt zu einem Inaktivieren von Mikroorganismen, welche in der Regel Feuchtigkeit beziehungsweise eine feuchte Umgebung benötigen.

Der Filterkörper kann grundsätzlich beliebig ausgestaltet sein. Besonders bevorzugt liegt der Filterkörper als wanddurchfluteter Filterkörper vor, bei welchem die entlang des Strömungswegs strömenden Luft den Filterkörper und mithin das Keramikmaterial durchströmt. Hierzu ist das Keramikmaterial porös. Insgesamt wird mit der beschriebenen Luftreinigungseinrichtung aufgrund der Verwendung des Filterkörpers des Kraftfahrzeugpartikelfilters eine besonders gute Filtrierleistung bei gleichzeitig geringem Druckverlust erzielt. Zudem dient die lipophile Oberfläche des Filterkörpers beziehungsweise des Keramikmaterials zu einem raschen Deaktivieren der unter Umständen in den Fremdpartikeln enthaltenen Mikroorganismen. Die Verwendung des beschriebenen Filterkörpers ermöglicht auch dessen Regenerierung, sodass also ein Wechsel des Luftfilters beziehungsweise des Filterelements entfällt. Stattdessen ist ein nahezu kontinuierlicher Betrieb der Luftreinigungseinrichtung mit dem Filterkörper umgesetzt.

Eine Weiterbildung der Erfindung sieht vor, dass der Filterkörper mehrere strömungstechnisch parallel angeordnete Strömungskanäle aufweist, die den Filterkörper jeweils vollständig durchgreifen, wobei jeder der Strömungskanäle mittels eines Verschlusses verschlossen ist. Der Filterkörper weist einerseits eine Einlassseite und andererseits eine Auslassseite auf. Beispielsweise ist der Filterkörper zylindrisch, insbesondere kreiszylindrisch, und die Einlassseite entspricht einer ersten Stirnseite des Filterkörpers und die Auslassseite einer zweiten Stirnseite des Filterkörpers, wobei die beiden Stirnseiten beabstandet voneinander angeordnet sind, insbesondere parallel beabstandet voneinander vorliegen. Vorzugsweise sind die beiden Stirnflächen über eine Mantelfläche des Filterkörpers miteinander verbunden.

Der Filterkörper ist von den mehreren Strömungskanälen durchgriffen, welche jeweils die Einlassseite mit der Auslassseite strömungstechnisch verbinden. Das bedeutet, dass jeder der Strömungskanäle von der Einlassseite bis hin zu der Auslassseite verläuft. Insbesondere durchgreift also jeder der Strömungskanäle einerseits die erste Stirnseite und andererseits die zweite Stirnseite des Filterkörpers. Der Strömungsweg erstreckt sich durch den Filterkörper ausgehend von seiner Einlassseite bis hin zu seiner Auslassseite, nämlich durch die Strömungskanäle. Vorzugsweise sind die Strömungskanäle nicht nur strömungstechnisch parallel zueinander angeordnet, sondern weisen auch parallel zueinander verlaufende Längsmittelachsen auf. Besonders bevorzugt verlaufen die Strömungskanäle durchgehend gerade, sodass auch ihre Längsmittelachsen durchgehend gerade sind.

Um einen wanddurchfluteten Filterkörper zu realisieren, ist jeder der Strömungskanäle mittels jeweils eines Verschlusses strömungstechnisch verschlossen. Das bedeutet, dass die in einen ersten der Strömungskanäle einströmende Luft lediglich bis hin zu dem diesen Strömungskanal verschließenden Verschluss strömen kann. Um weiter in Richtung der Auslassseite strömen zu können, muss die Luft zunächst das poröse Keramikmaterial durchströmen, um von dem ersten Strömungskanal in einen zweiten Strömungskanal zu gelangen. Durch diesen kann es weiter in Richtung der Auslassseite strömen. Durch das Hindurchströmen der Luft durch das Keramikmaterial wird eine besonders effektive Reinigung der Luft erzielt.

Unter dem Verschluss ist insbesondere ein Stopfen zu verstehen, welcher entweder auf der Einlassseite oder auf der Auslassseite in den jeweiligen Strömungskanal eingebracht wird. Der Verschluss ist derart ausgestaltet, dass er den jeweiligen Strömungskanal aus Richtung der Einlassseite und in Richtung der Auslassseite strömungstechnisch verschließt. Hierdurch wird die in einen der Strömungskanäle einströmende Luft gezwungen, das Keramikmaterial zu durchströmen, um in einen anderen der Strömungskanäle zu gelangen.

Eine Weiterbildung der Erfindung sieht vor, dass die Strömungskanäle erste Strömungskanäle und zweite Strömungskanäle umfassen, wobei die Verschlüsse in den ersten Strömungskanälen an einer ersten Axialposition bezüglich einer Längsmittelachse des Filterkörpers und in den zweiten Strömungskanälen an einer von der ersten Axialposition verschiedenen zweiten Axialposition angeordnet sind. Anders ausgedrückt können die Strömungskanäle in die ersten Strömungskanäle und die zweiten Strömungskanäle unterteilt werden. Vorzugsweise setzen sich die Strömungskanäle ausschließlich aus den ersten Strömungskanälen und den zweiten Strömungskanälen zusammen.

Vorzugsweise sind die ersten Strömungskanäle und die zweiten Strömungskanäle in einer oder mehreren Richtungen abwechselnd angeordnet, sodass also jeweils zwei der ersten Strömungskanäle einen der zweiten Strömungskanäle zwischen sich aufnehmen und umgekehrt jeweils zwei der zweiten Strömungskanäle einen der ersten Strömungskanäle zwischen sich aufnehmen. Die ersten Strömungskanäle und die zweiten Strömungskanäle unterscheiden sich hinsichtlich der Axialposition, an welcher der Verschluss angeordnet ist.

In den ersten Strömungskanälen liegen die Verschlüsse an der ersten Axialposition und in den zweiten Strömungskanälen an der zweiten Axialposition vor. Die beiden Axialpositionen sind voneinander beabstandet. In anderen Worten weisen die erste Axialposition und die zweite Axialposition unterschiedliche Abstände zu der Einlassseite beziehungsweise der Auslassseite auf. Beispielsweise ist die erste Axialposition näher an der Einlassseite als die zweite Axialposition. Besonders bevorzugt liegt die erste Axialposition in der der Einlassseite zugewandten Hälfte des Filterkörpers und die zweite Axialposition auf der der Auslassseite zugewandten Hälfte des Filterkörpers.

Beispielsweise weist die erste Axialposition von der Einlassseite einen Abstand auf, welcher höchstens 30 %, höchstens 20 % oder höchstens 10 % einer Gesamterstreckung des Filterkörpers in axialer Richtung entspricht. Umgekehrt weist die zweite Axialposition vorzugsweise von der Auslassseite einen Abstand auf, welcher höchstens 30 %, höchstens 20 % oder höchstens 10 % der Gesamterstreckung des Filterkörpers entspricht. Hierdurch wird eine besonders effektive Reinigung der Luft realisiert.

Eine Weiterbildung der Erfindung sieht vor, dass in dem Lufteinlass ein Lufteinlassgitter angeordnet ist, und/oder dass die Luftfördereinrichtung strömungstechnisch zwischen dem Luftfilter und dem Luftauslass angeordnet ist, und/oder dass strömungstechnisch zwischen dem Lufteinlass und dem Luftfilter ein Vorfilter vorliegt. In einer ersten Variante der Luftreinigungseinrichtung ist das Lufteinlassgitter in dem Lufteinlass angeordnet. Unter dem Lufteinlassgitter ist die Anordnung mehrerer Streben zu verstehen, welche den Lufteinlass teilweise verschließen und grobe Verunreinigungen aus der Luft ausfiltern, bevor sie durch den Lufteinlass in die Luftreinigungseinrichtung beziehungsweise das Gehäuse eintreten.

Beispielsweise besteht das Lufteinlassgitter aus mehreren Streben, welche sich von einer den Lufteinlass in radialer Richtung nach außen begrenzenden Wand des Gehäuses bis hin zu einer die Streben miteinander verbindenden Nabe erstrecken. Die Nabe weist beispielsweise einen Vorsprung auf, welcher sich aus dem Lufteinlass heraus erstreckt, um dem Lufteinlass beziehungsweise der Luftreinigungseinrichtung die Anmutung eines Flugzeugtriebwerks zu verleihen.

In einer zweiten Variante der Luftreinigungseinrichtung ist zwischen dem Luftfilter und dem Luftauslass die Luftfördereinrichtung strömungstechnisch angeordnet. Das bedeutet, dass sie bezüglich einer Hauptströmungsrichtung der Luft stromabwärts des Luftfilters vorliegt, sodass sie die Luft durch den Luftfilter saugt und in Richtung des Luftauslasses bläst. Hierdurch wird eine Verunreinigung der Luftfördereinrichtung durch die Fremdpartikel zuverlässig vermieden.

In einer dritten Variante der Luftreinigungseinrichtung ist zwischen dem Lufteinlass und dem Luftfilter der Vorfilter und die Heizeinrichtung angeordnet. Anders ausgedrückt liegen der Vorfilter und die Heizvorrichtung stromaufwärts des Luftfilters beziehungsweise des Filterkörpers vor. Sind sowohl der Vorfilter als auch die Heizvorrichtung realisiert, so ist der Vorfilter stromaufwärts der Heizvorrichtung angeordnet. Entsprechend liegt die Heizvorrichtung strömungstechnisch zwischen dem Vorfilter und dem Luftfilter vor.

Der Vorfilter dient dem Ausfiltern von groben Fremdpartikeln aus der Luft, bevor diese den Luftfilter und/oder die Heizvorrichtung erreichen. Der Vorfilter weist beispielsweise eine Wabenstruktur auf. Zusätzlich oder alternativ ist er farblich gegenüber dem Gehäuse der Luftreinigungseinrichtung abgesetzt. Besonders bevorzugt ist der Vorfilter nach Art eines Kühlereinlasses eines Kraftfahrzeugs ausgestaltet, sodass die Triebwerksanmutung der Luftreinigungseinrichtung noch verstärkt wird.

Die Heizvorrichtung dient dem Aufheizen der dem Luftfilter zugeführten Luft. Die Heizvorrichtung ist vorzugsweise dazu vorgesehen und ausgestaltet, die Luft auf eine Temperatur aufzuheizen, welche hinreichend ist, um in dem Luftfilter beziehungsweise dem Filterkörper vorliegenden Fremdpartikel abzubrennen oder zumindest zu passivieren und entsprechend den Filterkörper zu regenerieren.

Selbstverständlich kann es vorgesehen sein, eine oder mehrere der beschriebenen Varianten der Luftreinigungseinrichtung miteinander zu kombinieren. So kann die Luftreinigungseinrichtung das Lufteinlassgitter in dem Lufteinlass, die zwischen dem Luftfilter und dem Luftauslass angeordnete Luftfördereinrichtung sowie den Vorfilter und/oder die Heizvorrichtung aufweisen, bevorzugt sowohl den Vorfilter als auch die Heizvorrichtung. Dies ermöglicht ein besonders effektives und nachhaltiges Reinigen der Luft.

Eine Weiterbildung der Erfindung sieht vor, dass in dem Gehäuse ein Bypasskanal ausgestaltet ist, der strömungstechnisch parallel zu dem Luftfilter und strömungstechnisch in Reihe mit der Luftfördereinrichtung angeordnet ist. Der Bypasskanal ist anders ausgedrückt derart angeordnet, dass mittels der Luftfördereinrichtung geförderte Luft durch den Bypasskanal um den Luftfilter herumführbar ist. Ist der Bypasskanal verschlossen, so strömt die von der Luftfördereinrichtung geförderte Luft (vollständig) durch den Luftfilter. Ist der Bypasskanal teilweise oder vollständig geöffnet, so strömt die Luft zumindest teilweise durch den Bypasskanal und lediglich teilweise durch den Luftfilter. Hierdurch kann die Luft um den Luftfilter herumgeführt werden, beispielsweise während einer Regeneration des Luftfilters mithilfe der Heizvorrichtung.

Eine Weiterbildung der Erfindung sieht vor, dass der Luftauslass von einem Kraftfahrzeugendrohr gebildet ist. Das Kraftfahrzeugendrohr erstreckt sich aus dem Gehäuse heraus. Vorzugsweise ist es farblich und/oder materialtechnisch gegenüber dem Gehäuse abgesetzt. Das Kraftfahrzeugendrohr weist also eine andere Farbe auf und/oder besteht aus einem anderen Material als das Gehäuse. Bevorzugt ist das Kraftfahrzeugendrohr schräg angeschnitten, wobei es bei bestimmungsgemäßer Anordnung der Luftreinigungseinrichtung oben länger ist als unten. Eine solche Ausgestaltung des Luftauslasses dient einer Assoziierung der Luftreinigungseinrichtung mit einem Kraftfahrzeug durch einen Benutzer, sodass positive Aspekte der Luftreinigungseinrichtung auch auf das Kraftfahrzeug übertragen werden.

Eine Weiterbildung der Erfindung sieht vor, dass das Gehäuse eine Wartungsöffnung zum Entnehmen des Luftfilters aufweist, die zumindest zeitweise mittels eines Deckels verschlossen ist. Trotz der langen Lebensdauer des Filterkörpers kann es notwendig werden, diesen auszutauschen oder extern zu regenerieren. Um dies zu ermöglichen, weist das Gehäuse die Wartungsöffnung auf. Diese ist derart angeordnet und bemessen, dass der Filterkörper durch sie aus dem Gehäuse entnehmbar ist beziehungsweise dass sie einen Wechsel des Filterkörpers zulässt. Um ein Austreten von Rohluft aus dem Gehäuse zu verhindern, ist die Wartungsöffnung mithilfe des Deckels verschlossen. Insbesondere ist der Deckel stets dann zum Verschließen der Wartungsöffnung angeordnet, solange die Luftreinigungseinrichtung in Betrieb ist und mittels der Luftfördereinrichtung Luft entlang des Strömungswegs gefördert wird. Die beschriebene Ausgestaltung der Luftreinigungseinrichtung ermöglicht eine einfache Wartung.

Eine Weiterbildung der Erfindung sieht vor, dass der Deckel mittels eines Riegels zumindest zeitweise verriegelt ist. Der Riegel verhindert ein unbeabsichtigtes und/oder unautorisiertes Öffnen der Wartungsöffnung. Beispielsweise wird der Deckel verriegelt, solange die Luftreinigungseinrichtung in Betrieb ist, also mittels der Luftfördereinrichtung Luft entlang des Strömungswegs gefördert wird. Zusätzlich oder alternativ kann der Deckel verriegelt sein, um ein Entnehmen eines mit Fremdpartikeln beladenen Filterkörpers zu verhindern. Erst nach einem Regenerieren des Filterkörpers mithilfe der Heizeinrichtung wird der Deckel von dem Riegel zum Öffnen der Wartungsöffnung freigegeben. Bevorzugt erfolgt dies jedoch lediglich erst dann, wenn eine Temperatur des Filterkörpers einen Schwellenwert unterschreitet beziehungsweise kleiner ist als dieser.

Die Erfindung betrifft weiterhin ein Verfahren zum Betreiben einer Luftreinigungseinrichtung zum Reinigen von Luft, insbesondere einer Luftreinigungseinrichtung gemäß den Ausführungen im Rahmen dieser Beschreibung, wobei die Luftreinigungseinrichtung über ein Gehäuse verfügt, an dem ein Lufteinlass und ein Luftauslass ausgebildet sind, die über einen in dem Gehäuse verlaufenden Strömungsweg strömungstechnisch aneinander angebunden sind, wobei in dem Strömungsweg eine Luftfördereinrichtung zum Fördern der Luft entlang des Strömungswegs sowie ein Luftfilter zum Ausfiltern von Fremdpartikeln aus der Luft angeordnet sind. Dabei ist vorgesehen, dass der Luftfilter wenigstens einen Filterkörper eines Kraftfahrzeugpartikelfilters aus einem Keramikmaterial mit einer lipophilen Oberfläche aufweist. Weiterhin ist vorgesehen, dass zumindest zeitweise eine Regeneration des Filterkörpers vorgenommen wird, indem eine in dem Strömungsweg stromaufwärts des Filterkörpers angeordnete Heizvorrichtung zum Aufheizen der dem Filterkörper zugeführten Luft betrieben wird

Auf die Vorteile einer derartigen Vorgehensweise beziehungsweise einer derartigen Ausgestaltung der Luftreinigungseinrichtung wurde bereits hingewiesen. Sowohl die Luftreinigungseinrichtung als auch das Verfahren zu ihrem Betreiben können gemäß den Ausführungen im Rahmen dieser Beschreibung weitergebildet sein, sodass insoweit auf diese verwiesen wird.

Die Erfindung sieht vor, dass zumindest zeitweise eine Regeneration des Filterkörpers vorgenommen wird, indem eine in dem Strömungsweg stromaufwärts des Filterkörpers angeordnete Heizvorrichtung zum Aufheizen der dem Filterkörper zugeführten Luft betrieben wird. Während des Betriebs der Luftreinigungseinrichtung sammeln sich die aus der Luft ausgebildeten Fremdpartikel in dem Filterkörper und reichern sich dort an. Um ein Zusetzen des Filterkörpers zu vermeiden und weiterhin die hohe Filtrationsleistung bei gleichzeitig geringem Druckverlust zu erzielen, wird daher von Zeit zu Zeit die Regeneration des Filterkörpers durchgeführt.

Die Regeneration umfasst das Aufheizen der dem Filterkörper zugeführten Luft mithilfe der Heizvorrichtung. Insbesondere wird die Luft während der Regeneration derart aufgeheizt, dass die in dem Filterkörper vorliegenden Fremdpartikel oxidiert beziehungsweise verbrannt werden. Hierzu ist eine vergleichsweise hohe Temperatur notwendig.

Dient die Luftreinigungseinrichtung lediglich dazu, Mikroorganismen aus der Luft auszufiltern, so reicht es aus, die Luft lediglich bis auf eine geringere Temperatur aufzuheizen, beispielsweise auf mindestens 50 °C, mindestens 60 °C oder mindestens 70 °C. Bevorzugt wird die Luft jedoch auf mindestens 100 °C, mindestens 125 °C oder mindestens 150 °C aufgeheizt. Das Aufheizen der dem Filterkörper zugeführten Luft wird über eine bestimmte Zeitspanne durchgeführt, beispielsweise über mindestens 3 Minuten, mindestens 5 Minuten oder mindestens 20 Minuten. Zusätzlich oder alternativ ist es vorgesehen, das Aufheizen der Luft vorzunehmen, bis eine über den Filterkörper vorliegende Druckdifferenz unter einen Schwellenwert fällt.

Zusätzlich oder alternativ kann es im Zuge der Regeneration vorgesehen sein, den Filterkörper aus dem Gehäuse zu entnehmen und ihn in einer externen Einrichtung aufzuheizen, insbesondere bis auf eine Temperatur, bei welcher die in dem Filterkörper vorliegenden Fremdpartikel oxidieren beziehungsweise verbrennen. Die externe Einrichtung ist hierbei beispielsweise ein Backofen oder ähnliches. Die Regeneration des Filterkörpers ermöglicht das durchgehende Bereitstellen von Luft von hoher Qualität.

Eine Weiterbildung der Erfindung sieht vor, dass zumindest bei einer von einer Umgebungstemperatur abweichenden Temperatur des Filterkörpers eine stromabwärts des Filterkörpers vorliegende Temperatur der Luft durch zumindest teilweises Freigeben eines strömungstechnisch parallel zu dem Luftfilter angeordneten Bypasskanals auf eine Solltemperatur eingestellt wird. Der Bypasskanal ermöglicht ein Herumführen der Luft um den Filterkörper. Da der Filterkörper und die ihn durchströmende Luft während der Regeneration eine hohe Temperatur aufweisen, welche höher ist als die Umgebungstemperatur, ist es notwendig, die stromabwärts des Filterkörpers vorliegende Luft abzukühlen, um diese auf ein akzeptables Niveau zu bringen, bevor sie aus der Luftreinigungseinrichtung austritt.

Zu diesem Zweck wird der Bypasskanal zumindest teilweise geöffnet, sodass ein Teil der von der Luftfiltereinrichtung geförderten Luft den Bypasskanal durchströmt und lediglich ein Teil der Luft durch den Filterkörper strömt. Die den Filterkörper durchströmende Luft und die den Bypasskanal durchströmende Luft werden stromabwärts des Filterkörpers wieder zusammengeführt, sodass die Luft, welche den Filterkörper durchströmt hat, abgekühlt wird. Nachfolgend wird die Luft durch den Luftauslass aus der Luftreinigungseinrichtung ausgebracht. Die beschriebene Vorgehensweise ermöglicht eine zuverlässige Regeneration des Filterkörpers ohne eine Beeinträchtigung eines Komforts eines Nutzers.

Eine Weiterbildung der Erfindung sieht vor, dass die Regeneration des Filterkörpers durchgeführt wird, wenn eine mittels mindestens eines Drucksensors gemessene Druckdifferenz über den Filterkörper einen Schwellenwert überschreitet. Die Druckdifferenz gibt an, wie viel Fremdpartikel in dem Filterkörper aufgenommen sind. Je höher die Druckdifferenz ist, umso größer ist die Menge der Fremdpartikel. Übersteigt die Druckdifferenz den Schwellenwert, so wird darauf geschlossen dass die Regeneration des Filterkörpers notwendig ist. Entsprechend wird die Regeneration des Filterkörpers eingeleitet. Hierdurch wird ein dauerhaft zuverlässige Betrieb der Luftreinigungseinrichtung sichergestellt.

Eine Weiterbildung der Erfindung sieht vor, dass ein eine Wartungsöffnung verschließender Deckel nach Ablauf einer bestimmten Betriebszeit nach Inbetriebnahme oder der zuletzt vorgenommenen Regeneration verriegelt wird, und/oder dass der Deckel verriegelt gehalten wird, bis eine Regeneration des Filterkörpers erfolgt ist. Die beschriebene Vorgehensweise dient dazu, das Entnehmen eines mit Fremdpartikeln beladenen Filterkörpers aus dem Gehäuse zu verhindern. Entsprechend wird der Deckel spätestens nach Ablauf einer bestimmten Betriebszeit der Luftreinigungseinrichtung verriegelt. Zusätzlich oder alternativ ist es vorgesehen, den Deckel zu verriegeln, sobald die Druckdifferenz über den Filterkörper einen (weiteren) Schwellenwert überschreitet oder größer ist als dieser. Zusätzlich oder alternativ wird der Deckel erst dann wieder entriegelt, wenn die Regeneration des Filterkörpers vorgenommen wurde. Hierdurch wird sichergestellt, dass der aus dem Gehäuse entnommene Filterkörper mikrobiologisch unbedenklich ist.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

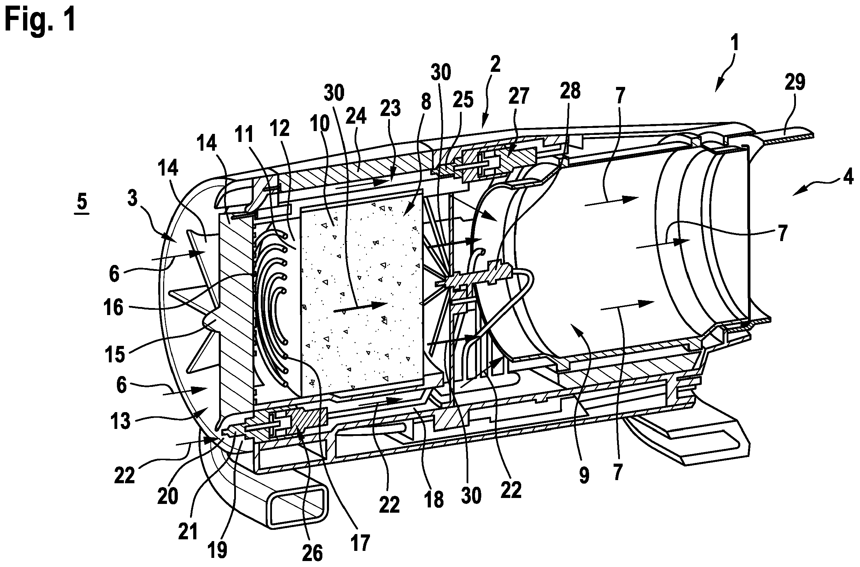

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur 1: eine schematische Schnittdarstellung einer Luftreinigungseinrichtung.

Die Figur 1 zeigt eine schematische Schnittdarstellung einer Luftreinigungseinrichtung 1, die zur Reinigung von Luft dient. Die Luftreinigungseinrichtung 1 verfügt über ein Gehäuse 2, an welchem ein Lufteinlass 3 sowie ein Luftauslass 4 ausgebildet sind. Während eines Betriebs der Luftreinigungseinrichtung 1 wird Luft aus einer Außenumgebung 5 durch den Lufteinlass 3 in die Luftreinigungseinrichtung 1 als Rohluft gesaugt und durch den Luftauslass 4 als Reinluft wieder in die Außenumgebung 5 ausgebracht. Dies ist durch die Pfeile 6 und 7 angedeutet.

Der Lufteinlass 3 und der Luftauslass 4 sind über einen in dem Gehäuse 2 verlaufenden Strömungsweg strömungstechnisch aneinander angebunden. Entlang des Strömungswegs liegen ein Luftfilter 8 sowie eine Luftfördereinrichtung 9 vor, wobei letztere lediglich äußerst schematisch angedeutet ist. Der Luftfilter 8 ist - bezogen auf eine Hauptströmungsrichtung der die Luftreinigungseinrichtung 1 durchströmenden Luft - stromaufwärts der Luftfördereinrichtung 9 angeordnet. Er verfügt über einen Filterkörper 10, der aus einem Keramikmaterial mit einer lipophilen Oberfläche besteht. Der Filterkörper 10 ist als Filterkörper eines Kraftfahrzeugpartikelfilters ausgestaltet beziehungsweise analog zu einem solchen aufgebaut. In dem Filterkörper liegen insoweit mehrere strömungstechnisch parallel angeordnete Strömungskanäle 11 und 12 vor, welche hier lediglich angedeutet sind.

Bevorzugt ist der gesamte Filterkörper 10 mit solchen Strömungskanälen 11 und 12 durchsetzt, wobei jeder der Strömungskanäle 11 und 12 den Filterkörper 10 in Hauptströmungsrichtung der Luft vollständig durchgreift. Insbesondere liegen mehrere Strömungskanäle 11 und mehrere Strömungskanäle 12 vor, wobei die Strömungskanäle 11 auch als erste Strömungskanäle 11 und die Strömungskanäle 12 auch als zweite Strömungskanäle 12 bezeichnet werden können. Die Strömungskanäle 11 und 12 sind jeweils mittels eines Verschlusses, welche als Stopfen ausgestaltet sein kann, verschlossen. Die Verschlüsse der Strömungskanäle 11 und 12 sind hierbei an unterschiedlichen Axialpositionen angeordnet, nämlich derart, dass der Filterkörper 10 als wanddurchfluteter Filterkörper 10 ausgestaltet ist.

Es ist erkennbar, dass in dem Lufteinlass 3 ein Lufteinlassgitter 13 vorliegt, welches sich aus mehreren Streben 14 zusammensetzt, die sternförmig angeordnet sind und an einer zentralen Nabe 15 aufeinandertreffen beziehungsweise über diese aneinander befestigt sind. Weiterhin ist erkennbar, dass strömungstechnisch zwischen dem Lufteinlass 3 und dem Luftfilter 8 ein Vorfilter 16 und eine Heizvorrichtung 17 angeordnet sind. Die Heizvorrichtung 17 liegt in dem hier dargestellten Ausführungsbeispiel als Heizspirale vor, welche eine Stirnseite des Filterkörpers 10 weitgehend übergreift, insbesondere zu mindestens 50 %, mindestens 60 % oder mindestens 70 %.

In dem Gehäuse 2 ist weiterhin ein Bypasskanal 18 ausgebildet, der einerseits in eine Ringkammer 19 einmündet, die in dem Gehäuse 2 ausgebildet ist und den Lufteinlass 3 in Umfangsrichtung zumindest teilweise, bevorzugt jedoch durchgehend, umgreift. Die Ringkammer 19 mündet über eine Mündungsöffnung 20 in die Außenumgebung 5 ein. Mithilfe eines Ventilelements 21, das in der Ringkammer 19 angeordnet ist, lässt sich ein Durchströmungsquerschnitt der Mündungsöffnung 20 einstellen. In einer ersten Einstellung ist die Mündungsöffnung 20 bevorzugt vollständig verschlossen und in einer zweiten Stellung zumindest teilweise freigegeben. In der ersten Einstellung ist insoweit der Bypasskanal 18 strömungstechnisch verschlossen und in der zweiten Einstellung zumindest teilweise freigegeben. Die sich in der zweiten Einstellung einstellende Strömung ist durch die Pfeile 22 angedeutet. Der Bypasskanal 18 ist derart angeordnet, dass er strömungstechnisch in Reihe mit der Luftfördereinrichtung 9, jedoch strömungstechnisch parallel zu den Filterkörper 10 angeordnet ist. Durch den Bypasskanal 18 durchströmende Luft wird insoweit um den Luftfilter 8 herumgeführt.

Weiterhin verfügt die Luftreinigungseinrichtung 1 über eine in dem Gehäuse 2 ausgebildete Wartungsöffnung 23, die zumindest zeitweise mittels eines Deckels 24 verschlossen ist. Die Wartungsöffnung 23 ermöglicht das Entnehmen beziehungsweise Austauschen des Luftfilters 8. Der Deckel 24 ist zumindest zeitweise mittels eines Riegels 25 verriegelt. Bevorzugt ist das Ventilelement 21 mittels eines ersten Magnetstellers 26 und der Riegel 25 mittels eines zweiten Magnetstellers 27 verstellbar beziehungsweise verlagerbar.

Schließlich verfügt die Luftreinigungseinrichtung 1 über einen Drucksensor 28, mittels welchem der Differenzdruck über den Luftfilter 8 messbar ist. Der Drucksensor 28 ist bevorzugt stromabwärts des Luftfilters 8 zentral in dem Strömungsweg angeordnet, um eine zuverlässige und genaue Druckmessung umzusetzen. Weiterhin ist darauf hinzuweisen, dass der Luftauslass 4 von einem Kraftfahrzeugendrohr 29 gebildet ist beziehungsweise optisch an ein solches angelehnt ist.

Die beschriebene Luftreinigungseinrichtung 1 ermöglicht ein zuverlässiges Reinigen der Luft beziehungsweise ein zuverlässiges Herausfiltern von Fremdpartikeln aus der Luft. Da diese Fremdpartikel Mikroorganismen umfassen können, ist es vorgesehen, den Luftfilter 8 von Zeit zu Zeit zu regenerieren. Hierzu wird die dem Luftfilter 8 zugeführten Luft mittels der Heizvorrichtung 17 aufgeheizt, nämlich bis auf eine Temperatur, welche zumindest für ein Inaktivieren der Mikroorganismen sorgt. Die warme Luft durchströmt hierbei gemäß den Pfeilen 30 den Luftfilter 8. Sie wird stromabwärts des Luftfilters 8 mit Luft zusammengeführt, welche durch den Bypasskanal 18 um den Luftfilter 8 herumgeführt wurde, um die aus den Luftauslass 4 in die Außenumgebung 5 ausströmende Luft auf eine angenehme Temperatur einzustellen.

Selbstverständlich ist die beschriebene Luftfiltereinrichtung 1 nicht auf die hier dargestellte Ausgestaltung beschränkt. Vielmehr kann es vorgesehen sein, dass die Luftreinigungseinrichtung 1 in eine lufttechnische Anlage integriert ist, beispielsweise in eine Lüftungsanlage eines Gebäudes beziehungsweise Wohngebäudes. In jedem Fall kann die besonders gute Filterleistung des Filterkörpers 10 des Kraftfahrzeugpartikelfilters ausgenutzt werden, um eine besonders gründliche Reinigung der Luft zu erzielen.

Der Filterkörper 10 ist bevorzugt derart ausgestaltet, dass er für Partikel bis zu einem Durchmesser von 5 nm einen Filterwirkungsgrad von mindestens 95 % aufweist. Typische Viren, welche mithilfe Luftreinigungseinrichtung 1 aus der Luft ausgefiltert werden sollen, haben einen Durchmesser von 60 bis 140 nm. Für derartige Partikel weist der Luftfilter 8 einen Filterwirkungsgrad beziehungsweise eine Abscheidungsrate von mindestens 90 %, mindestens 92 % oder mindestens 94 % auf.

### BEZUGSZEICHENLISTE:

- 1: Luftreinigungseinrichtung
- 2: Gehäuse
- 3: Lufteinlass
- 4: Luftauslass
- 5: Außenumgebung
- 6: Pfeil
- 7: Pfeil
- 8: Luftfilter
- 9: Luftfördereinrichtung
- 10: Filterkörper
- 11: Strömungskanal
- 12: Strömungskanal
- 13: Lufteinlassgitter
- 14: Strebe
- 15: Nabe
- 16: Vorfilter
- 17: Heizvorrichtung
- 18: Bypasskanal
- 19: Ringkammer
- 20: Mündungsöffnung
- 21: Ventilelement
- 22: Pfeil
- 23: Wartungsöffnung
- 24: Deckel
- 25: Riegel
- 26: 1. Magnetsteller
- 27: 2. Magnetsteller
- 28: Drucksensor
- 29: Kraftfahrzeugendrohr
- 30: Pfeil

## Patentansprüche

1. Luftreinigungseinrichtung (1) zur Reinigung von Luft, mit einem Gehäuse (2), an dem ein Lufteinlass (3) und ein Luftauslass (4) ausgebildet sind, die über einen in dem Gehäuse (2) verlaufenden Strömungsweg strömungstechnisch aneinander angebunden sind, wobei in dem Strömungsweg eine Luftfördereinrichtung (9) zur Förderung der Luft entlang des Strömungswegs sowie ein Luftfilter (8) zur Ausfilterung von Fremdpartikeln aus der Luft angeordnet sind, wobei der Luftfilter (8) wenigstens einen Filterkörper (10) eines Kraftfahrzeugpartikelfilters aus einem Keramikmaterial mit einer lipophilen Oberfläche aufweist, **dadurch gekennzeichnet, dass** strömungstechnisch zwischen dem Lufteinlass (3) und dem Luftfilter (8) eine Heizvorrichtung (17) vorliegt.

2. Luftreinigungseinrichtung nach Anspruch 1, **dadurch gekennzeichnet, dass** der Filterkörper (10) mehrere strömungstechnisch parallel angeordnete Strömungskanäle (11, 12) aufweist, die den Filterkörper (10) jeweils vollständig durchgreifen, wobei jeder der Strömungskanäle (11, 12) mittels eines Verschlusses verschlossen ist.

3. Luftreinigungseinrichtung nach Anspruch 2, **dadurch gekennzeichnet, dass** die Strömungskanäle (11, 12) erste Strömungskanäle (11) und zweite Strömungskanäle (12) umfassen, wobei die Verschlüsse in den ersten Strömungskanälen (11) an einer ersten Axialposition bezüglich einer Längsmittelachse des Filterkörpers (10) und in den zweiten Strömungskanälen (12) an einer von der ersten Axialposition verschiedenen zweiten Axialposition angeordnet sind.

4. Luftreinigungseinrichtung nach einem der vorhergehenden Ansprüche, **dadurch gekennzeichnet, dass** in dem Lufteinlass (3) ein Lufteinlassgitter (13) angeordnet ist, und/oder dass die Luftfördereinrichtung (9) strömungstechnisch zwischen dem Luftfilter (8) und dem Luftauslass (4) angeordnet ist, und/oder dass strömungstechnisch zwischen dem Lufteinlass (3) und dem Luftfilter (8) ein Vorfilter (16) vorliegt.

5. Luftreinigungseinrichtung nach einem der vorhergehenden Ansprüche, **dadurch gekennzeichnet, dass** in dem Gehäuse (2) ein Bypasskanal (18) ausgestaltet ist, der strömungstechnisch parallel zu dem Luftfilter (8) und strömungstechnisch in Reihe mit der Luftfördereinrichtung (9) angeordnet ist.

6. Luftreinigungseinrichtung nach einem der vorhergehenden Ansprüche, **dadurch gekennzeichnet, dass** das Gehäuse (2) eine Wartungsöffnung (23) zum Entnehmen des Luftfilters (8) aufweist, die zumindest zeitweise mittels eines Deckels (24) verschlossen ist.

7. Verfahren zum Betreiben einer Luftreinigungseinrichtung (1) zum Reinigen von Luft, insbesondere einer Luftreinigungseinrichtung (1) nach einem oder mehreren der vorhergehenden Ansprüche, wobei die Luftreinigungseinrichtung (1) über ein Gehäuse (2) verfügt, an dem ein Lufteinlass (3) und ein Luftauslass (4) ausgebildet sind, die über einen in dem Gehäuse (2) verlaufenden Strömungsweg strömungstechnisch aneinander angebunden sind, wobei in dem Strömungsweg eine Luftfördereinrichtung (9) zum Fördern der Luft entlang des Strömungswegs sowie ein Luftfilter (8) zum Ausfiltern von Fremdpartikeln aus der Luft angeordnet sind, wobei der Luftfilter wenigsten einen Filterkörper (10) eines Kraftfahrzeugpartikelfilters aus einem Keramikmaterial mit einer lipophilen Oberfläche aufweist, **dadurch gekennzeichnet, dass** zumindest zeitweise eine Regeneration des Filterkörpers (10) vorgenommen wird, indem eine in dem Strömungsweg stromaufwärts des Filterkörpers (10) angeordnete Heizvorrichtung (17) zum Aufheizen der dem Filterkörper (10) zugeführten Luft betrieben wird.

8. Verfahren nach Anspruch 7, **dadurch gekennzeichnet, dass** zumindest bei einer von einer Umgebungstemperatur abweichenden Temperatur des Filterkörpers (10) eine stromabwärts des Filterkörpers (10) vorliegende Temperatur der Luft durch zumindest teilweises Freigeben eines strömungstechnisch parallel zu dem Luftfilter (8) angeordneten Bypasskanals (18) auf eine Solltemperatur eingestellt wird.

9. Verfahren nach einem der Ansprüche 7 oder 8, **dadurch gekennzeichnet, dass** die Regeneration des Filterkörpers (10) durchgeführt wird, wenn eine mittels mindestens eines Drucksensors (28) gemessene Druckdifferenz über den Filterkörper (10) einen Schwellenwert überschreitet.

## Claims

1. Air purifying device (1) for purifying air, comprising a housing (2), on which an air inlet (3) and an air outlet (4) are formed, which are fluidically interconnected via a flow path extending in the housing (2), wherein an air conveying device (9) for conveying the air along the flow path and an air filter (8) for filtering foreign particles out of the air are arranged in the flow path, wherein the air filter (8) comprises at least one filter body (10) of a motor vehicle particle filter made of a ceramic material having a lipophilic surface, **characterized in that** a heating device (17) is provided fluidly between the air inlet (3) and the air filter (8).

2. Air purifying device according to claim 1, **characterized in that** the filter body (10) has multiple flow channels (11, 12) fluidically arranged in parallel, which respectively pass completely through the filter body (10), wherein each of the flow channels (11, 12) is closed by means of a closure.

3. Air purifying device according to claim 2, **characterized in that** the flow channels (11, 12) comprise first flow channels (11) and second flow channels (12), wherein the closures in the first flow channels (11) are arranged at a first axial position with respect to a longitudinal center axis of the filter body (10) and in the second flow channels (12) are arranged at a second axial position different from the first axial position.

4. Air purifying device according to any one of the preceding claims, **characterized in that** an air inlet grille (13) is arranged in the air inlet (3), and/or that the air conveying device (9) is fluidly arranged between the air filter (8) and the air outlet (4), and/or that a pre-filter (16) is fluidly arranged between the air inlet (3) and the air filter (8).

5. Air purifying device according to any one of the preceding claims, **characterized in that** a bypass channel (18) is formed in the housing (2), which channel is arranged fluidically in parallel to the air filter (8) and fluidically in series with the air conveying device (9).

6. Air purifying device according to any one of the preceding claims, **characterized in that** the housing (2) has a maintenance opening (23) for removing the air filter (8), which is at least temporarily closed by means of a lid (24).

7. Method for operating an air purifying device (1) for purifying air, in particular an air purifying device (1) according to one or more of the preceding claims, wherein the air purifying device (1) has a housing (2) on which an air inlet (3) and an air outlet (4) are formed, which are fluidly interconnected via a flow path extending in the housing (2), wherein an air conveying device (9) for conveying the air along the flow path and an air filter (8) for filtering foreign particles out of the air are arranged in the flow path, wherein the air filter comprises at least one filter body (10) of a motor vehicle particle filter made of a ceramic material having a lipophilic surface, **characterized in that** a regeneration of the filter body (10) is carried out at least temporarily by operating a heating device (17) arranged in the flow path upstream of the filter body (10), to heat the air supplied to the filter body (10).

8. Method according to claim 7, **characterized in that,** at least at a temperature of the filter body (10) that deviates from an ambient temperature, a temperature of the air present downstream of the filter body (10) is set to a target temperature, by at least partially opening a bypass channel (18) fluidically arranged in parallel to the air filter (8).

9. Method according to claim 7 or 8, **characterized in that** the regeneration of the filter body (10) is carried out when a pressure difference across the filter body (10) measured by at least one pressure sensor (28) exceeds a threshold value.

## Revendications

1. Dispositif de purification d'air (1) pour purifier de l'air, avec un boîtier (2) sur lequel sont constituées une prise d'air (3) et une sortie d'air (4) qui sont fluidiquement raccordées entre elles via un chemin d'écoulement traversant le boîtier (2), où dans le chemin d'écoulement sont disposés un dispositif de transport d'air (9) pour transporter l'air le long du chemin d'écoulement ainsi qu'un filtre à air (8) pour filtrer les particules étrangères de l'air, le filtre à air (8) comportant au moins un corps de filtration (10) d'un filtre de véhicule automobile constitué d'un matériau céramique avec une surface lipophile, **caractérisé en ce qu'un** dispositif de chauffage (17) est présent fluidiquement entre la prise d'air (3) et le filtre à air (8).

2. Dispositif de purification d'air selon la revendication 1, **caractérisé en ce que** le corps de filtration (10) présente plusieurs canaux d'écoulement (11, 12) fluidiquement disposés en parallèle, qui traversent entièrement le corps de filtration (10), où chacun des canaux d'écoulement (11, 12) est verrouillé par un bouchon.

3. Dispositif de purification d'air selon la revendication 2, **caractérisé en ce que** les canaux d'écoulement (11, 12) comprennent de premiers canaux d'écoulement (11) et de seconds canaux d'écoulement (12), où les bouchons sont disposés dans les premiers canaux d'écoulement (11) dans une première position axiale par rapport à un axe médian longitudinal du corps de filtration (10) et dans les seconds canaux d'écoulement (12) dans une seconde position axiale différente de la première position axiale.

4. Dispositif de purification d'air selon l'une des revendications précédentes, **caractérisé en ce que** dans la prise d'air (3) est disposée une grille d'entrée d'air (13), et/ou **en ce que** le dispositif de transport d'air (9) est disposé fluidiquement entre le filtre à air (8) et la sortie d'air (4), et/ou **en ce qu'**il y a un préfiltre (16) fluidiquement entre la prise d'air (3) et le filtre à air (8).

5. Dispositif de purification d'air selon l'une des revendications précédentes, **caractérisé en ce que** dans le boîtier (2) est configuré un canal de dérivation (18) qui est disposé fluidiquement parallèle au filtre à air (8) et fluidiquement en série avec le dispositif de transport d'air (9).

6. Dispositif de purification d'air selon l'une des revendications précédentes, **caractérisé en ce que** le boîtier (2) comporte une ouverture d'inspection (23) pour prélever le filtre à air (8) qui est fermée au moins temporairement par un couvercle (24).

7. Procédé de fonctionnement d'un dispositif de purification d'air (1) pour purifier de l'air, en particulier d'un dispositif de purification d'air (1) selon au moins l'une des revendications précédentes, où le dispositif de purification d'air (1) dispose d'un boîtier (2) sur lequel sont constituées une prise d'air (3) et une sortie d'air (4) qui sont fluidiquement raccordées entre elles via un chemin d'écoulement traversant le boîtier (2), où dans le chemin d'écoulement sont disposés un dispositif de transport d'air (9) pour transporter l'air le long du chemin d'écoulement ainsi qu'un filtre à air (8) pour filtrer les particules étrangères de l'air, le filtre à air comportant au moins un corps de filtration (10) d'un filtre de véhicule automobile constitué d'un matériau céramique avec une surface lipophile, **caractérisé en ce qu'**est effectuée au moins temporairement une régénération du corps de filtre (10), où un dispositif de chauffage (17) disposé sur le chemin d'écoulement en amont du corps de filtre (10) est utilisé pour chauffer l'air acheminé au corps de filtre (10).

8. Procédé selon la revendication 7, **caractérisé en ce qu'**au moins si une température du corps de filtre (10) diffère de la température ambiante, une température de l'air en aval du corps de filtre (10) est réglée à une température de consigne par l'ouverture au moins partielle d'un canal de dérivation (18) disposé fluidiquement parallèle au filtre à air (8).

9. Procédé selon l'une des revendications 7 ou 8, **caractérisé en ce que** la régénération du corps de filtre (10) est effectuée si une différence de pression à travers le corps de filtre (10) mesurée par au moins un manomètre (28) dépasse une différence de pression seuil.
